# EUROPÄISCHE PATENTSCHRIFT

(11) **EP 0 514 754 B1**
(45) Veröffentlichungstag und Bekanntmachung des Hinweises auf die Patenterteilung: **10.07.1996**
(21) Anmeldenummer: 92108049.5
(22) Anmeldetag: 13.05.1992
(51) Int. Cl.: F16D 3/50

(54) **Hoch drehelastische Wellenkupplung**
Coupling with high torsional resiliency
Accouplement à grande élasticité en torsion

(30) Priorität: 23.05.1991 DE 4116781
(43) Veröffentlichungstag der Anmeldung: 25.11.1992
(73) Patentinhaber: CENTA-ANTRIEBE KIRSCHEY GmbH, D-42781 Haan (DE)
(72) Erfinder: Kirschey, Gerhard, Dipl.-Ing., W-5600 Wuppertal 11 (DE)
(74) Vertreter: Patentanwälte Ostriga & Sonnet

(56) Entgegenhaltungen:
- EP-A- 0 034 440
- BE-A- 526 221
- DE-A- 3 616 232
- DE-C- 262 319
- DE-U- 9 106 339
- GB-A- 238 111

## Beschreibung

Die Erfindung bezieht sich auf eine hoch drehelastische Wellenkupplung zum Ausgleich radialer, axialer und winkliger Verlagerungen der angeschlossenen Aggregate, im wesentlichen bestehend aus zwei axial hintereinander angeordneten Kupplungsteilen, deren erster, axial und winklig steifer sowie radial weicher Kupplungsteil mindestens ein zwischen im wesentlichen axialweisenden Flächen vulkanisiertes Gummielement umfaßt und deren zweiter, radial steifer sowie winklig und axial verlagerbarer Kupplungsteil zum Anschluß an eine Nabe wenigstens ein Verbindungselement umfaßt, welches mittels axial gerichteter Bolzen am ersten Kupplungsteil angelenkt ist, wie in DE-A-3616232 beschrieben.

Kupplungen dieser Art werden unter der Bezeichnung ***CENTAX***^{***(R***}***)***, Baureihe 'B', von der Anmelderin hergestellt und vertrieben. Der erste Kupplungsteil besteht dabei aus einem oder mehreren hintereinandergeschalteten hochelastischen, an axialweisende Flächen metallischer Ringkörper anvulkanisierten Gummiringen. Dieser erste Kupplungsteil ist deshalb hoch drehelastisch und radial sehr elastisch, jedoch in axialer Richtung und in Bezug auf winkeligen Versatz relativ steif. Deshalb wurde dieses erste Kupplungselement mit einer Bolzenkupplung als zweitem Kupplungsteil kombiniert, die den ersten Kupplungsteil mit einer Nabe verbindet. Die Bolzenkupplung umfaßt radial am ersten Kupplungsteil angeschlossene Bolzen mit elastisch ausgerüsteten Buchsenelementen, auf die ein mit der Nabe verbundener Ringkörper als Verbindungselement axial aufgesteckt ist. Diese Bolzenkupplung ist axial und winklig verlagerungsfähig, jedoch sehr drehsteif, und führt deshalb in Verbindung mit dem ersten Kupplungsteil zu einer bewährten Kupplung, die alle wesentlichen Anforderungen hinsichtlich Elastizität und Beherrschung von Verlagerungen der angeschlossenen Maschinenteile während des Betriebs sehr gut erfüllt.

Der Erfindung liegt die Aufgabe zugrunde, eine Kupplung der vorausgesetzten Art unter Beibehaltung eines prinzipiell recht einfachen Aufbaus hinsichtlich ihrer Eigenschaften der axialen und winkligen Verlagerungsfähigkeit weiter zu optimieren. Eine wesentliche Zielrichtung ist dabei die Anwendung der Kupplung bei Schiffsantrieben höherer Leistung. Hier treten, vor allem auch wegen der meist sehr nachgiebig gelagerten Dieselmotoren, verlagerungsmäßig besonders hohe Anforderungen auf, zu deren Beherrschung die genannte ***CENTAX***^{***(R)***}***-B*** nicht mehr in jedem Fall optimal geeignet ist.

Die Erfindung löst die Aufgabe im wesentlichen dadurch, daß der zweite Kupplungsteil wenigstens drei Lenker als Verbindungselemente zwischen dem ersten Kupplungsteil und der Nabe umfaßt, und jeder Lenker in einem von einem der Bolzen getragenen sphärischen Lager an dem ersten Kup Kupplungsteil und in einem zylindrischen Lager an der Nabe mittels radial an dieser angreifenden Balsen angelenkt ist. Im Prinzip besteht die neue Wellenkupplung aus einer eigentümlichen Kombination einer hochelastischen Gummiringkupplung mit einer besonders gestalteten und daran angepaßten Lenkerkupplung.

Lenker- oder Gelenkhebelkupplungen sind grundsätzlich bekannt und werden beispielsweise bei Kardanwellenantrieben für Treibradsätze elektrischer Triebfahrzeuge eingesetzt. Eine solche, z.B. aus der CH 436 869 bekannte Kupplung mit aufwendigen Kugel- oder kardanischen Gelenken an den Enden der Lenker ist jedoch nicht dreh- und radialelastisch. Wollte man bislang mit einer hoch drehelastischen Kupplung auch radiale, axiale und winklige Verlagerung ausgleichen, hat man andere Wege beschritten:

Bei der ***RATO***-Kupplung der Firma Vulkan Kupplungs- und Getriebebau Bernhard Hackforth GmbH & Co. KG (vgl. auch DE 37 10 390 A1) besteht der erste Kupplungsteil aus zwei axial hintereinander liegenden Gummi-Metall-Segmentanordnungen, die zu Ringkörpern zusammengefügt sind. Daran ist als zweiter Kupplungsteil entweder ein Membranring oder eine komplexe Anordnung biegeelastischer Laschen angeflanscht. Abgesehen von der komplexen und aufwendigen Bauweise haben solche Membran- und Laschenanordnungen vor allem den Nachteil, daß die von diesen Elementen ausgehenden Reaktionskräfte bei axialen oder winkligen Verlagerungen der angeschlossenen Maschinenaggregate enorm sind. Mit der erfindungsgemäßen Kupplung sind demgegenüber erheblich größere Abweichungen bei geringeren Reaktionskräften beherrschbar.

Das gilt in nennenswertem Umfang auch bezüglich der ***Triflex***-Kupplung der Firma Machinenfabrik Stromag GmbH (vgl. auch DE 36 16 232 A1), deren erster Kupplungsteil wiederum aus einer ringförmigen und gleichfalls segmentierten, radial und in Drehrichtung nachgiebigen Gummi-Metall-Anordnung besteht, wohingegen der zweite Kupplungsteil ebenfalls aus einer solchen Anordnung besteht, bei der jedoch die Vulkanisationsflächen achsparallel an konzentrischen Ringen ausgerichtet sind. Insbesondere bei größeren Kupplungsbauarten ist die Vulkanisationstechnik erheblich aufwendiger als die Ausbildung und Anbringung der Lenker bei der erfindungsgemäßen Kupplung.

Die Erfindung stellt daher eine neuartige und relativ preiswerte Wellenkupplung zur Verfügung, die in bisher einzigartiger Kombination und Anordnung der Kupplungsteile und ihrer Elemente alle Anforderungen an eine in jeder Richtung verlagerungsfähige Kupplung auch für den Dauerbetrieb optimal erfüllt.

Eine hinsichtlich vereinfachter Konstruktion besonders vorteilhafte Anordnung der Lenker an der Nabe ist dadurch gekennzeichnet, daß die Lager elastische Gummilager bzw. -gelenke sind, deren Gummikörper jeweils Bestandteil eines unter radialer Vorspannung zwischen Buchse und Auge des Lenkers eingespannten Gummi-Metall-Elements ist bzw. durch Vulkanisation mit der Buchse verbunden ist. Solche Lager sind erheblich einfacher als beispielsweise kompliziert gestaltete Kugel- oder Kardangelenke an den Enden der Lenker. Diese selbst können ebenfalls recht einfach gestaltet sein, insbesondere, wenn sie entsprechend einem Vorschlag der Erfindung eine pleuelartige Ausbildung mit um 90° zueinander versetzten Pleuelaugen aufweisen.

Die Erfindung wird nachfolgend anhand eines in den Zeichnungen dargestellten Ausführungsbeispiels näher erläutert. In den Zeichnungen zeigen:
- Fig. 1: einen Längsschnitt durch die Kupplung und

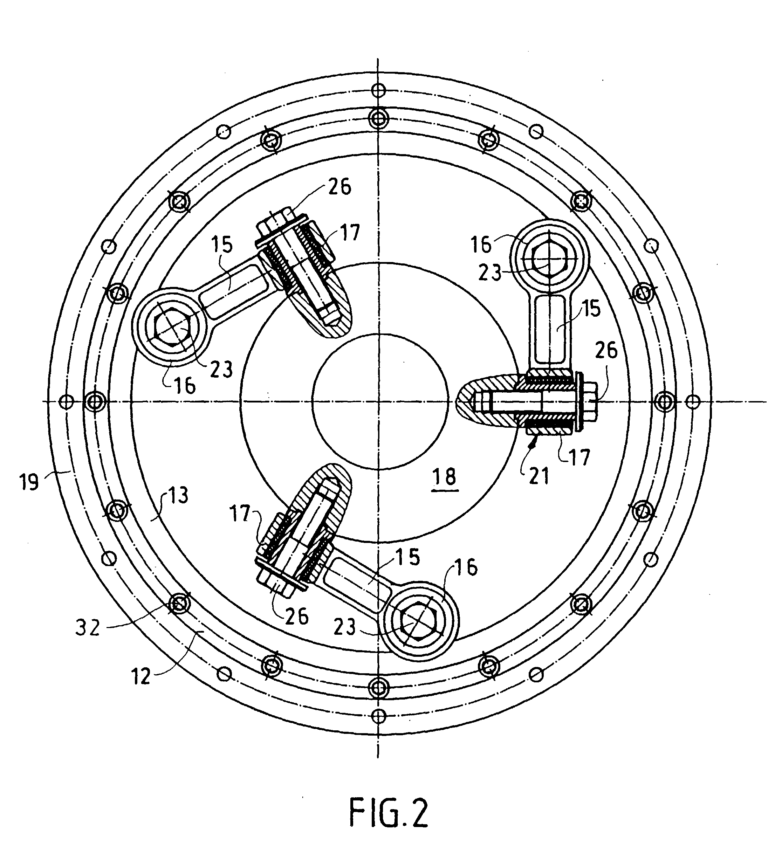

- Fig. 2: eine Ansicht auf die Kupplung mit Blickrichtung auf die Nabe.

Die dargestellte Kupplung besteht aus einem ersten Kupplungsteil 10 und einem zweiten Kupplungsteil 11.

Der erste Kupplungsteil 10 umfaßt zwei Stahlringe 12 und 13, zwischen denen an ihre im wesentlichen axial aufeinanderzu weisende Flächen ein hochelastischer Ring 13 aus Gummi anvulkanisiert ist. Dieser erste Kupplungsteil 10 ist aufgrund seiner Bauart axial und winklig steif, jedoch radial sehr elastisch.

Der zweite Kupplungsteil 11 umfaßt mindestens drei Lenker 15, die hinsichtlich ihrer Form mit Pleueln vergleichbar sind, deren Pleuelaugen 16 und 17 jedoch um 90° gegeneinander versetzt angeordnet sind. Selbstverständlich können auch mehr als drei Lenker 15 vorgesehen sein; wegen der statischen Bestimmtheit der Anordnung sind jedoch wenigstens drei Lenker erforderlich.

Die Lenker 15 dienen als Verbindungselemente zwischen dem ersten Kupplungsteil 10 und einer Nabe 18. Die Gesamtanordnung kann man sich so vorstellen, daß der Kupplungsteil 10 mittels Schraubbolzen 32 am Schwungradflansch 19 eines Dieselmotors angeflanscht ist, während die Nabe 18 zum drehfesten Anschluß einer Schiffsgetriebewelle dient.

Die Pleuel 15 sind über sphärische Lager 20 am ersten Kupplungsteil 10 und mittels zylindrischer Lager 21 an der Nabe 18 angelenkt. Beim Ausführungsbeispiel umfaßt das sphärische Lager 20 eine Buchse 22 mit kugelabschnittsförmig gestalteter Oberfläche, die mittels eines Bolzens 23 am ersten Kupplungsteil 10 befestigt ist. Beim Ausführungsbeispiel erfolgt diese Befestigung nicht unmittelbar, sondern unter Vermittlung eines mit einer besonderen Schraubverbindung 24 mit dem Stahlring 13 verbundenen Zwischenringes 25, in den der Schraubbolzen 23 eingesetzt ist.

Mittels bezüglich radial an der Nabe 18 angreifender und in diese eingesetzten Schraubbolzen 26 sind ebenfalls Buchsen 27 zur Lagerung der Lenker 15 angeordnet, doch bilden diese Buchsen 27 mit ihren kreiszylindrischen Mantelflächen kein sphärisches, sondern ein einfacheres zylindrisches Lager aus.

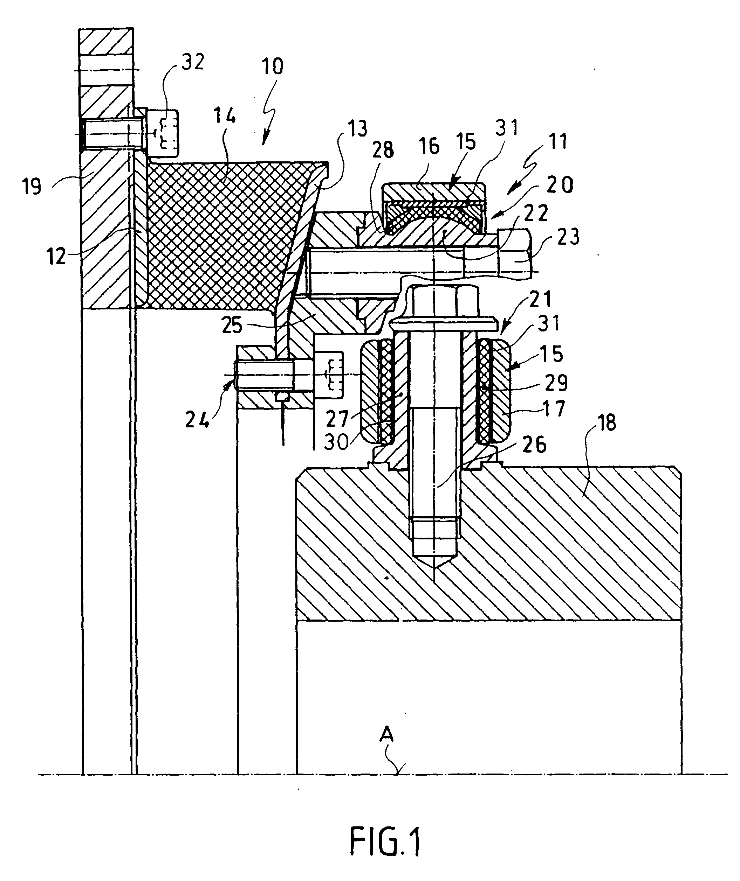

Sowohl das sphärische Lager 20 als auch das zylindrische Lager 21 sind mit elastischen Einlagen 28 und 29. Solche Gummilager oder -gelenke sind grundsätzlich bekannt. Sie können - wie in Fig. 1 beim zylindrischen Lager 21 dargestellt - aus Gummi-Metall-Elementen 29, 30, 31 bestehen. Dabei ist ein hülsenförmiger Körper aus Gummi zwischen zwei axialgeschlitzte Metallhülsen 30 und 31 einvulkanisiert. Das Gummi-Metall-Element wird unter radialer Vorspannung zwischen dem Auge 16 des Lenkers 15 und der Buchse 27 eingespannt. Eine andere, am Beispiel des sphärischen Lagers 20 veranschaulichte Ausführung sieht vor, daß das Gummielement an der Buchse 22 anvulkanisiert und außen von einer axialgeschlitzten Metallhülse 31 eingespannt ist. Der Lenker 15 wird mit seinem Auge 16 auf dieses ihm gegenüber radial vorgespannte Lager aufgepreßt. Unabhängig von der jeweiligen konkreten Ausführung ist es wichtig, daß sich sämtliche Verlagerungen zwischen Lenker 15 und der jeweils zugeordneten Buchse 22 bzw. 27 ausschließlich von der Elastizität des Gummikörpers 28 bzw. 29 aufgenommen werden.

Wie aufgrund der beschriebenen Anordnung und insbesondere in Verbindung mit den Zeichnungen jetzt ersichtlich ist, sind großzügige Schwenkbewegungen der Pleuel 15 um die Längsachse des Schraubbolzens 26 möglich, wobei wegen der elastischen Auskleidung 29 des zylindrischen Lagers 21 auch noch in gewissem Umfange winklige Ablenkungen der Nabe möglich sind. Am anderen Ende des Pleuels 15 gestattet das sphärische Lager eine beträchtliche sphärische Bewegung des Pleuels 15. Da die Pleuel 15 in vorteilhafter Weise recht lang sein können, wird jede axiale Bewegung der Nabe 18 in Richtung der Achse A und jede winklige Bewegung dieser Achse in relativ geringe Drehbewegungen im Gummi des Lagers 21 bzw. geringe sphärische Bewegungen im Gummi des Lagers 20 umgeformtsetzt, und die daraus resultierenden Reaktionskräfte sind sehr niedrig.

Es werden also alle Axial- und Winkelbewegungen, die zwischen den beiden Kupplungsteilen 10 und 11 relativ zueinander auftreten, in geringe Schwenkbewegungen der Pleuel 15 übertragen. Diese Schwenkbewegungen werden von den Gummikörpern der Lagerbuchsen 20 und 21 ohne Probleme und verschleißfrei aufgenommen verkraftet und ergeben sehr geringe Reaktionskräfte.

Im dynamischen Betrieb überlagern sich die Bewegungen mit ihren sämtlichen Freiheitsgraden, wodurch der zweite Kupplungsteil 11 insgesamt äußerst versatzausgleichend sowohl hinsichtlich axialer Abweichungen in Richtung der Hauptachse A als auch hinsichtlich winkliger Abweichungen zwischen Nabe 18 und Schwungrad 19 ist.

Die beanspruchte und beschriebene Wellenkupplung hat in einem Dauertest ihre Leistungsfähigkeit in einem nicht zu erwartenden Maße hervorragend bewiesen. Dabei hat sich auch gezeigt, daß sie außergewöhnlich betriebssicher und verschleißfrei ist.

## Patentansprüche

1. Hoch drehelastische Wellenkupplung zum Ausgleich radialer, axialer und winkliger Verlagerungen der angeschlossenen Aggregate, im wesentlichen bestehend aus zwei axial hintereinander angeordneten Kupplungsteilen (10, 11), deren erster, axial und winklig steifer sowie radial weicher Kupplungsteil (10) mindestens ein zwischen im wesentlichen axialweisenden Flächen vulkanisiertes Gummielement (14) umfaßt und deren zweiter, radial steifer sowie winklig und axial verlagerbarer Kupplungsteil (12) zum Anschluß an eine Nabe (18) wenigstens ein Verbindungselement umfaßt, welches mittels axial gerichteter Bolzen (23) am ersten Kupplungsteil (10) angelenkt ist, dadurch gekennzeichnet, daß der zweite Kupplungsteil (11) wenigstens drei Lenker (15) als Verbindungselemente zwischen dem ersten Kupplungsteil (10) und der Nabe (18) umfaßt, und jeder Lenker (15) in einem von einem der Bolzen (23) getragenen sphärischen Lager (20) an dem ersten Kupplungsteil (10) und in einem zylindrischen Lager (21) an der Nabe (18) mittels radial an dieser angreifender Bolzen (26) angelenkt ist.

2. Wellenkupplung nach Anspruch 1, dadurch gekennzeichnet, daß die Lager (20, 21) elastische Gummilager bzw. -gelenke sind, deren Gummikörper (28; 29) jeweils Bestandteil eines unter radialer Vorspannung zwischen Buchse (27) und Auge (16; 17) des Lenkers (15) eingespannten Gummi-Metall-Elements (28, 31; 29, 30, 31) ist bzw. durch Vulkanisation mit der Buchse (28; 29) verbunden ist.

3. Wellenkupplung nach Anspruch 1 oder 2, gekennzeichnet durch pleuelartige Ausbildung der Lenker (15) mit um 90° zueinander vesetzten Pleuelaugen (16, 17).

## Claims

1. Torsionally highly flexible shaft coupling for compensating radial, axial and angular displacements of the connected units, substantially comprising two coupling parts (10, 11) disposed one axially behind the other, of which a first, axially and angularly rigid as well as radially non-rigid coupling part (10) comprises at least one rubber element (14) vulcanized between substantially axially directed surfaces and a second, radially rigid as well as angularly and axially displaceable coupling part (12) has, for the connection to a hub (18), at least one connection element which is coupled by means of axially directed bolts (23) to the first coupling part (10), characterized in that the second coupling part (11) comprises at least three guide rods (15) as connection elements between the first coupling part (10) and the hub (18), and each guide rod (15) is coupled in a spherical bearing (20) carried by one of the bolts (23) to the first coupling part (10) and in a cylindrical bearing (21) to the hub (18) by means of bolts (26) acting radially upon said hub.

2. Shaft coupling according to claim 1, characterized in that the bearings (20, 21) are elastic rubber bearings or rubber joints, the rubber body (28; 29) of which is in each case a component part of a rubber/metal element (28, 31; 29, 30, 31) clamped under radial initial stress between bush (27) and eye (16; 17) of the guide rod (15) or is connected by vulcanization to the bush (28; 29).

3. Shaft coupling according to claim 1 or 2, characterized by construction of the guide rods (15) in the manner of connecting rods having eyes (16, 17) offset by 90° relative to one another.

## Revendications

1. Accouplement pour arbre, à grande élasticité en torsion, pour compenser des décalages radiaux, axiaux et angulaires entre les groupes raccordés, constitué essentiellement de deux parties d'accouplement (10, 11) disposées axialement l'une derrière l'autre, dont la première partie d'accouplement (10) est axialement et angulairement plus rigide, ainsi que radialement plus souple, comprend au moins un élément en caoutchouc (14) vulcanisé entre des surfaces orientées sensiblement axialement et dont la deuxième partie d'accouplement (12), radialement plus rigide ainsi que déplaçable angulairement et axialement comprend, pour assurer le raccordement à un moyeu (18), au moins un élément de liaison qui est articulé sur la première partie d'accouplement (10), au moyen d'un boulon (23) orienté axialement, caractérisé en ce que la deuxième partie d'accouplement (11) comprend au moins trois bras articulés (15) servant d'éléments de liaison entre la première partie d'accouplement (10) et le moyeu (18), et chaque bras articulé (15) étant articulé dans un palier sphérique (20), porté par l'un des boulons (23) et prévu sur la première partie d'accouplement (10), et dans un palier cylindrique (21), prévu sur le moyeu (18), au moyen de boulons (26) s'engageant radialement sur celui-ci.

2. Accouplement d'arbre selon la revendication 1, caractérisé en ce que les paliers (20, 21) sont des paliers ou des articulations en caoutchouc, élastiques, dont les corps en caoutchouc (28; 29) font chacun partie d'un élément métal-caoutchouc (28, 31; 29, 30, 31) enserré avec une précontrainte radiale entre la douille (27) et l'oeillet (16; 17) du bras articulé (15), respectivement sont reliés à la douille (28) par vulcanisation.

3. Accouplement d'arbre selon la revendication 1 ou 2, caractérisé par une réalisation en bielle des bras articulés (15), avec des oeillets de bielle (16, 17) décalés de 90° les uns par rapport aux autres.
